# EUROPÄISCHE PATENTSCHRIFT

(11) **EP 4 142 080 B1**
(45) Veröffentlichungstag und Bekanntmachung des Hinweises auf die Patenterteilung: **09.08.2023**
(21) Anmeldenummer: 21192638.1
(22) Anmeldetag: 23.08.2021
(51) Int. Cl.: H02G 3/08, H02G 3/10, H02B 1/26, H02B 1/40, H02B 1/42, H02B 1/48, H05K 5/02, H02G 3/14, H01R 13/74, H01H 9/02

(54) **ELEKTROINSTALLATIONSDOSE FÜR DIE AUFPUTZMONTAGE MIT EINEM ÜBER EINEN ENTNEHMBAREN EINSATZ VERSCHLOSSENEN DURCHBRUCH**
ELECTRICAL INSTALLATION BOX FOR SURFACE INSTALLATION WITH AN OPENING CLOSED BY A REMOVABLE INSERT
BOÎTIER D'INSTALLATION ÉLECTRIQUE POUR LE MONTAGE APPARENT DOTÉ D'UNE TRAVERSÉE FERMÉE AU MOYEN D'UN INSERT AMOVIBLE

(43) Veröffentlichungstag der Anmeldung: 01.03.2023
(73) Patentinhaber: GIRA GIERSIEPEN GmbH & Co. KG, 42477 Radevormwald (DE)
(72) Erfinder: Warmuth, Sven, 58511 Lüdenscheid (DE); Vesper, Clas, 42499 Hückeswagen (DE)
(74) Vertreter: Angerhausen, Christoph

(56) Entgegenhaltungen:
- EP-A1- 0 657 905
- EP-A1- 3 840 150
- WO-A1-2012/084168
- FR-A1- 2 881 285

## Beschreibung

Die Erfindung geht aus von einer Elektroinstallationsdose für die Aufputzmontage, wobei ein Installationsraum der Elektroinstallationsdose von einem Boden und einer von dem Boden abstehenden Wandung begrenzt ist, wobei die Wandung mindestens einen über einen entnehmbaren Einsatz verschlossenen Durchbruch aufweist. Eine derartige Elektroinstallationsdose wird beispielsweise von der Gira Giersiepen GmbH & Co. KG unter der Handelsbezeichnung E2- und System 55-Aufputzgehäuse vertrieben.

Derartige Elektroinstallationsdosen werden dazu verwendet, um unterschiedlichste Funktionseinsätze aufzunehmen, beispielsweise einen oder mehrere elektrische Schalter, einen Steckdoseneinsatz, einen Raumthermostat und dergleichen. Für die Integration in die Hausinstallation wird der Elektroinstallationsdose dabei in der Regel eine jeweils geeignete Versorgungsleitung, beispielsweise eine Netzspannungsleitung, eine Signalleitung eines Bus-Systems oder dergleichen zugeführt, mit welcher der jeweils von der Elektroinstallationsdose aufgenommene Funktionseinsatz in der Dose verdrahtet wird. Über standarisierte Befestigungsmittel wird der Einsatz in der Dose befestigt und die Dose an Ihrer Vorderseite über einen Abdeckrahmen ästhetisch ansprechend verschlossen. Der Boden der Elektroinstallationsdose, über den die Dose auf einer Unterlage, beispielsweise auf einer Gebäudewand, montiert werden kann, weist in der Regel mindestens einen Durchbruch, vorzugsweise mehrere Langlöcher auf, um die Elektroinstallationsdose Aufputz zu verschrauben.

Während im Wohnbereich die Unterputzmontage von Elektroinstallationsdosen etabliert ist, finden Elektroinstallationsdosen für die Aufputzmontage insbesondere in Kellern, Garagen und sonstigen üblicherweise nicht oder nicht hinreichend mit Tageslicht erleuchteten Räumen Anwendung. Wenn die Elektroinstallationsdose dabei beispielsweise einen Lichtschaltereinsatz beherbergt, kann es für einen Anwender mitunter schwierig sein, den Lichtschalter überhaupt aufzufinden, um den Raum zu beleuchten. Zur Behebung dieses Problems ist es aus der EP 3 270 046 B1 bekannt, eine Beleuchtungsvorrichtung in einen Abdeckrahmen für eine Elektroinstallationsdose zu montieren. In dem Abdeckrahmen kann mindestens eine LED vorgesehen sein, die aufgrund ihrer niedrigen Leistungsaufnahme dauerhaft oder uhrzeitabhängig betrieben werden kann und somit beim Betreten des Raumes als eine Anzeige für die Position des Lichtschalters verwendet werden kann.

WO2012/084168A1 offenbart eine Dose, bei der am Wandeinsatz mindestens ein Funktionselement angeformt ist, mit dem eine mechanische und/oder elektrische Funktionserweiterung des Installationsgerätes erreicht werden kann.

Die bekannte Lösung hat jedoch den Nachteil, dass bei Installationsarbeiten an der Elektroinstallationsdose, beispielsweise im Falle des Austausches des Doseneinsatzes, zunächst die Abdeckung der Elektroinstallationsdose mit dem darin aufgenommenen und verdrahteten Einsatz demontiert werden muss. Bei Kompatibilitätsproblemen zwischen dem Abdeckrahmen und dem neuen Doseneinsatz kann zudem die Neuanschaffung des Abdeckrahmens erforderlich werden, was entsprechende Kostennachteile mit sich bringt.

Es ist daher die Aufgabe der Erfindung, eine Elektroinstallationsdose für die Aufputzmontage zur Verfügung zu stellen, welche mit technisch einfachen Mitteln für die Nachrüstung mit einer Zusatzfunktion, etwa einer Datenschnittstelle oder einer Lichtquelle zur Beleuchtung oder als Orientierungshilfe vorbereitet ist.

Diese Aufgabe wir durch eine Elektroinstallationsdose mit den Merkmalen des Anspruchs 1 gelöst. Die abhängigen Ansprüche betreffen jeweils vorteilhafte Ausführungsformen der Erfindung.

Demgemäß ist vorgesehen, dass der Einsatz eine Leiterplatine mit einer elektrischen Komponente oder alternativ eine direktverdrahtete elektrische Komponente aufweist, wobei mindestens ein elektrischer Leiter von der Leiterplatine bzw. von der direktverdrahteten elektrischen Komponente in den Installationsraum geführt ist. Über die Leiterplatine kann ein somit ein Funktionsmodul in Form einer elektrischen Komponente elektrisch und je nach Anwendungsfall auch mechanisch angebunden sein. So kann auf der Leiterplatine beispielsweise ein Leuchtmittel, etwa eine LED, direkt verlötet oder mittelbar an die Leiterplatine angeschlossen und von dieser angesteuert sein. Alternativ oder zusätzlich kann auch jedes andere über eine auf einer Leiterplatine realisierbare Schaltung ansteuerbare Funktionsmodul, etwa eine drahtgebundene oder eine drahtlose Datenschnittstelle, angebunden sein. Die direktverdrahtete elektrische Komponente kann beispielsweise eine Datenschnittstelle, etwa eine CAT-Buchse, beispielsweise eine RJ₄₅-Buchse sein.

Der Erfindung liegt die Idee zugrunde, den bei den bekannten Elektroinstallationsdosen ohnehin vorhandenen Einsatz, etwa um eine Anschlussstelle für die Anreihung mehrerer Elektroinstallationsdosen oder für die Kabeleinführung zu verschließen, wenn diese nicht benötigt wird, für die Montage eines eine elektrische Komponente aufweisenden Einsatzes zu verwenden, mithin einer Zweitverwendung zuzuführen. Somit kann der Einsatz hinsichtlich seiner mechanischen Schnittstelle zu dem Gehäuse der Elektroinstallationsdose beispielsweise identisch zu den bereits bekannten Blindeinsätzen ausgeführt sein, etwa als ein Schieber, welcher über eine an gegenüberliegenden parallelen Längsseiten ausgebildete Nut-Feder-Verbindung in entsprechende komplementäre Geometrien des Gehäuses eingreift.

Auf der Leiterplatine kann irgendeine funktionale Baugruppe des Einsatzes in Form einer elektrischen Schaltung auf der Leiterplatine realisiert sein. Die elektrische Schaltung kann beispielsweise für die Ansteuerung einer Datenschnittstelle oder eines Leuchtmittels ausgelegt sein. Dazu kann auf der Leiterplatine beispielsweise mindestens eine CAT-Buchse, etwa eine RJ₄₅-Buchse oder eine Leuchtdiode (LED) angeordnet sein, die von der elektrischen Schaltung auf der Leiterplatine angesteuert ist.

Die Leiterplatine kann somit alternativ oder zusätzlich mindestens eine Datenschnittstelle aufweisen oder für die Datenübertragung mit einer Datenschnittstelle ausgelegt sein. Die Datenschnittstelle kann beispielsweise in Form einer Buchse an einer Außenseite des Einsatzes ausgebildet sein. Die Datenschnittstelle kann eine physikalische Schnittstelle sein, beispielsweise eine Buchse für einen Modularen Steckverbinder, etwa einen Modular-Jack-Stecker, oder eine Funkschnittstelle sein, die beispielsweise als ein WLAN-Modul oder ein Bluetooth-Modul ausgebildet ist. Die Buchse kann zum Beispiel eine CAT-Buchse des Standards RJ₄₅ sein.

Die elektrischen Leiter des Einsatzes können unmittelbar in den Installationsraum eingeführt und dabei beispielsweise über die Anschlussklemme des in der Elektroinstallationsdose zu montierenden Doseneinsatzes an die Netzspannung klemmt und somit mit Strom versorgt werden. Auch hier kann der elektrische Leiter wiederum unmittelbar durch den die Schiebe- oder Steckaufnahme des Einsatzes mit dem Installationsraum verbindenden Durchbruch in den Installationsraum eingeführt sein.

Der mindestens eine elektrische Leiter kann mit der Leiterplatine fest verbunden sein. Beispielsweise kann der mindestens eine elektrische Leiter mit der Leiterplatine verlötet sein. Die Leiterplatine weist vorzugsweise zwei (jeweils einpolige) elektrische Leiter für den Anschluss an die Netzspannung auf, beispielsweise einen ersten Leiter für den Anschluss an den Außenleiter (L-Leiter) und einen zweiten Leiter für den Anschluss an den Neutralleiter (N-Leiter) einer Netzspannungsversorgung.

Dazu kann der mindestens eine elektrische Leiter vorzugsweise an seinem von der Leiterplatine abgewandten freien Ende eine Aderendbehandlung für den Direktanschluss an Netzspannung aufweisen. Die Aderendbehandlung kann beispielsweise eine Quetschhülse sein. Als Aderendbehandlung können die Leiterenden bevorzugt verlötet oder mit Steckverbindungen ausgeführt sein. Eine derartige Aderendbehandlung ist beispielsweise dazu geeignet, um über eine Leiteranschlussklemme an die Netzspannungsversorgung angeschlossen zu werden.

Der Einsatz kann ein Gehäuse aufweisen, in dem die Leiterplatine mit mindestens einem Leuchtmittel, beispielsweise mit mindestens einer LED, aufgenommen ist. Dabei kann vorgesehen sein, dass das Gehäuse einen senkrecht zu der Außenseite der Wandung geöffneten Lichtdurchlass aufweist. In der Montagesituation kann insbesondere vorgesehen sein, dass die Elektroinstallationsdose mit dem Lichtdurchlass zum Boden eines Raums gerichtet an einer Gebäudewand montiert wird, sodass der Boden unterhalb der den erfindungsgemäßen Einsatz aufweisenden Elektroinstallationsdose erleuchtet und damit die räumlichen Gegebenheiten des Raumes für einen Benutzer leichter auffindbar und gefahrlos betretbar sind. Somit kann ein Orientierungslicht geschaffen werden, das auch als Wand- und/oder Deckenbeleuchtung zum Einsatz kommen kann.

Das Leuchtmittel kann außerhalb der Flucht des Lichtdurchlasses und ein Lichtleiter zwischen dem Leuchtmittel und dem Lichtdurchlass angeordnet sein. Über den Lichtleiter kann das aus dem Leuchtmittel austretende Licht zu dem Lichtdurchlass geleitet werden, um über den Lichtauslass aus dem Einsatz auszutreten. Ein Lichteintritt des Lichtleiters kann dabei dem Leuchtmittel und ein Lichtaustritt des Lichtleiters dem Lichtdurchlass zugewandt sein.

Das Leuchtmittel kann beispielsweise mindestens eine LED und vorzugsweise mindestens zwei LEDs aufweisen. Wenn mehrere LEDs vorgesehen sind, können diese Licht mit verschiedenem Spektrum emittieren, wobei der Lichtleiter gerade dazu eingerichtet ist, das Licht der beiden LEDs zu mischen. Dies kann dazu verwendet werden, einen etwa aus ästhetischen Gründen ausgewählten Farbton des über den Lichtaustritt austretenden Lichts einzustellen, insbesondere um möglichst weißes Licht mithilfe der LEDs zu erzeugen.

Der Lichtaustritt des Lichtleiters kann in den Durchbruch hineinragen und formschlüssig in dem Durchbruch aufgenommen sein. Weiterhin kann eine Lichtaustrittseite des Lichtaustritts dabei mit einer Außenseite der Wandung und/oder des Gehäuses fluchten.

Der Einsatz kann ein Gehäuse mit einem dem Installationsraum zugewandten Platinenträger, in dem die Leiterplatine aufgenommen oder von dem die Leiterplatine gehalten ist, und einer den Platinenträger verschließenden Abdeckung aufweisen.

Der Platinenträger kann mindestens einen Kabeldurchlass für den mindestens einen elektrischen Leiter aufweisen, durch den der elektrische Leiter in den Installationsraum mündet.

Der Lichtleiter kann zwischen einem Platinenträger und einer Abdeckung des Gehäuses gehalten sein. Dabei können sich eine Lichteintrittsrichtung und eine Lichtaustrittsrichtung des Lichtleiters parallel und beabstandet zueinander erstrecken.

Der Durchbruch kann in eine Steck- oder Schiebeaufnahme münden, die zu einer von dem Boden abgewandten Stirnseite der Wandung offen ist. Dabei kann der Einsatz über die Stirnseite in den Durchbruch eingesetzt sein.

Wenn der Einsatz keine Platine für die Bereitstellung der funktionalen elektrischen Komponente aufweist, kann stattdessen eine direktverdrahtete elektrische Komponente etwa in Form einer Datenschnittstelle bereitgestellt sein. Die direkt verdrahtete elektrische Komponente kann ein Buchsengehäuse aufweisen, welches form- und kraftschlüssige in dem Gehäuse des Einsatzes aufgenommen und gehalten ist. Für die Direktverdrahtung der Komponente kann der Einsatz an seiner dem Installationsraum zugewandten Seite einen Verdrahtungsanschluss aufweisen.

Nur mit einer Steckeraufnahme kann das Buchsengehäuse zur Außenseite des Gehäuses des Einsatzes freiliegen. Mit Rastnasen kann der Einsatz durch einen Durchbruch in den Installationsraum hineinragen und damit den Einsatz in Bezug auf eine Kante des Durchbruchs arretieren, um beim Herauslösen eines Steckers ein versehentliches Herausziehen des Einsatzes aus der Schiebeaufnahme zu verhindern.

Die Steck- oder Schiebeaufnahme kann an mindestens einer von zwei gegenüberliegenden Kanten, die sich senkrecht zu dem Boden erstrecken und vorzugsweise parallel zueinander verlaufen, eine Nut aufweisen, die in einem an die Stirnseite angrenzenden Bereich ausgebrochen ist. Die ausgebrochene Nut kann dazu vorgesehen sein, dass für das Einsetzen des Einsatzes in die Schiebeaufnahme der Einsatz nicht über die gesamte Länge der Schiebeaufnahme in die Schiebeaufnahme eingeschoben werden muss. Dies erleichtert insbesondere das Hindurchführen des mindestens einen elektrischen Leiters durch den Durchbruch in den Installationsraum der Elektroinstallationsdose, da die Gefahr des Abscherens des mindestens einen Leiters beim Einsetzvorgang wirkungsvoll vermieden wird.

Die Steck- oder Schiebeaufnahme kann in einem an die Stirnseite angrenzenden Bereich zu dem Installationsraum hin geschlossen sein und in einem daran angrenzenden, dem Boden zugewandten Bereich den Durchbruch aufweisen. Insbesondere kann der Durchbruch bis angrenzend an den Boden ausgebildet, das heißt geöffnet sein.

Die Elektroinstallationsdose kann mehrere der Steck- oder Schiebeaufnahmen aufweisen. Vorzugsweise ist an unterschiedlichen Wandabschnitten der Wandung, beispielsweise an senkrecht aufeinander stehenden oder parallel zueinander ausgerichteten Wandabschnitten einer quaderförmigen Elektroinstallationsdose jeweils mindestens eine Steck- oder Schiebeaufnahme ausgebildet. Die mehreren Steck- oder Schiebeaufnahme können identisch ausgebildet sein, wobei mindestens eine der Steck- oder Schiebeaufnahmen von einem weiteren Einsatz, etwa von einem Blindeinsatz, verschlossen sein kann. Dadurch wird erreicht, dass durch Vertauschen des weiteren Einsatzes, etwa des Blindeinsatzes, mit dem die Leiterplatine mit dem Leuchtmittel aufweisenden Einsatz die Position des Leuchtmittels in Bezug auf die Wandung der Elektroinstallationsdose variiert werden kann.

Der Einsatz, vorzugsweise der Platinenträger des Einsatzes, kann an der dem Durchbruch zugewandten Seite einen stegförmigen Vorsprung aufweisen mit dem der Einsatz an einer Berandung des Durchbruchs anliegt, sodass der Einsatz in Bezug auf den Durchbruch positioniert ist. Darüber hinaus kann der Steg stabilisierende Wirkung in Bezug auf den Platinenträger aufweisen. Zusätzlich kann vorgesehen sein, dass an dem stegförmigen Vorsprung mindestens eine Kabeldurchführung angeformt ist. Der mindestens eine elektrische Leiter kann durch die Kabeldurchführung hindurchgeführt sein, wobei die Kabeldurchführung in den Durchbruch mündet oder zu diesem hin geöffnet ist.

Vorteilhafterweise ist die mindestens eine Kabeldurchführung als eine Einzelkabeldurchführung ausgebildet, durch die der mindestens eine elektrische Leiter formschlüssig hindurchgeführt ist. Dabei kann sich eine Durchlassrichtung der Kabeldurchführung senkrecht zum Öffnungsquerschnitt des Durchbruchs erstrecken.

Die erfindungsgemäße Elektroinstallationsdose hat den Vorteil, dass eine Funktionalität, etwa eine Beleuchtungsfunktionalität, welche z. B. vormals entweder in die Abdeckung der Elektroinstallationsdose oder unmittelbar in den Doseneinsatz integriert war, von der Elektroinstallationsdose selbst bereitgestellt werden kann, sodass sie auch erhalten bleibt, wenn der Funktionseinsatz zu einem späteren Zeitpunkt ausgetauscht wird.

Weitere Einzelheiten der Erfindung werden anhand der nachstehenden Figuren erläutert. Dabei zeigt:
- Figur 1: eine Elektroinstallationsdose gemäß dem Stand der Technik in perspektivischer Darstellung;
- Figur 2: eine Elektroinstallationsdose gemäß einer Ausführungsform der Erfindung mit eingesetztem Einsatz und in perspektivischer Darstellung;
- Figur 3: die Ausführungsform gemäß Figur 2 mit entnommenem Einsatz;
- Figur 4: eine Seitenansicht der Elektroinstallationsdose gemäß Figur 3;
- Figur 5: eine Elektroinstallationsdose gemäß einer anderen Ausführungsform der Erfindung mit entnommenem Einsatz und in perspektivischer Darstellung;
- Figur 6: eine Explosionsdarstellung eines Einsatzes gemäß einer Ausführungsform der Erfindung;
- Figur 7: eine weitere Explosionsdarstellung des Einsatzes gemäß Figur 6;
- Figur 8: ein Längsschnitt in perspektivischer Darstellung durch die Ausführungsform gemäß den Figuren 6 und 7; und

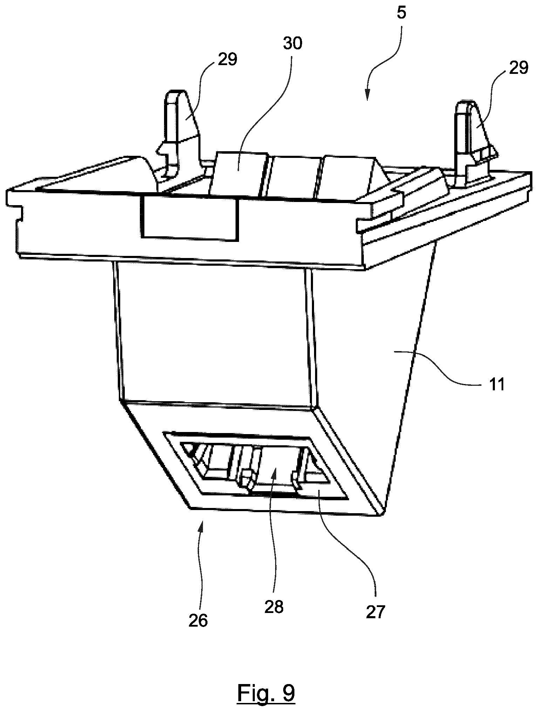

- Figur 9: einen als Buchse einer Datenschnittstelle ausgebildeten Einsatz gemäß einer weiteren Ausführungsform der Erfindung.

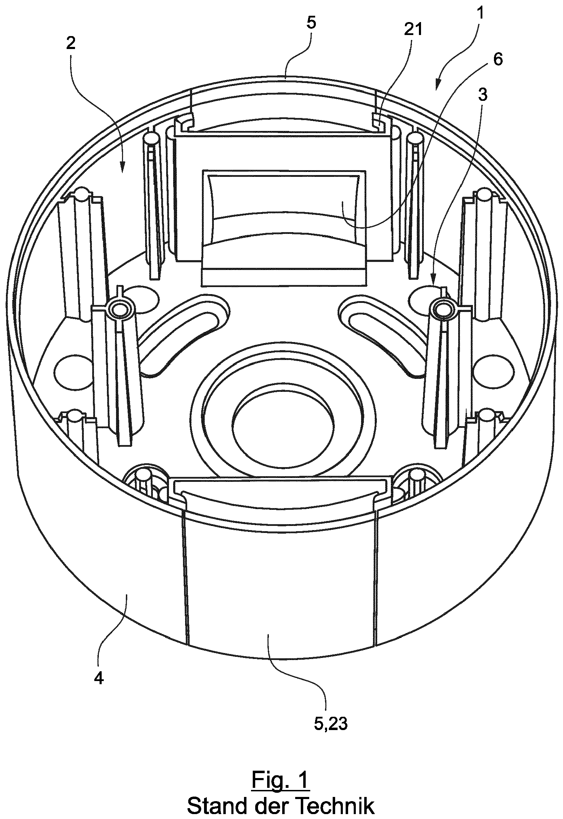

Die Figur 1 zeigt eine Elektroinstallationsdose 1 gemäß dem Stand der Technik. Diese kann im Wesentlichen als ein Spritzgussformteil ausgebildet sein, welches einen Boden 3 und senkrecht dazu ausgebildet eine Wandung 4 aufweist, wobei die Wandung 4 und der Boden einen Installationsraum 2 begrenzen. In den Installationsraum 2 kann ein Funktionseinsatz, beispielsweise ein elektrischer Schalter oder ein Steckdoseneinsatz eingesetzt und mit einem Netzanschluss verdrahtet werden. Neben der dargestellten Ausführungsformen aus dem Stand der Technik mit im Wesentlichen kreisrundem Querschnitt sind auch Elektroinstallationsdosen 1 entsprechender Bauart mit quadratischem oder rechteckigem Querschnitt bekannt, wie sie etwa unter der Artikelnummer 106129 von der Gira Giersiepen GmbH angeboten werden.

An gegenüberliegenden Abschnitten der Wandung 4 einer solchen runden oder rechteckigen Elektroinstallationsdose 1 ist jeweils ein Einsatz 5 ausgebildet, der vorliegend die Funktion eines Blindeinsatzes aufweist und insbesondere einen jeweiligen Durchbruch 6 in den Installationsraum 2 verschließt, wenn dieser nicht benötigt wird. Der Durchbruch 6 kann beispielsweise dazu verwendet werden, um ein Kabel, das etwa durch ein Leerrohr entlang einer Wand auf der die Elektroinstallationsdose installiert ist, geführt in den Installationsraum 2 eingeleitet wird. Zur Aufnahme des Einsatzes 5 sind dem jeweiligen Durchbruch 6 beigeordnet Schieberaufnahmen 21 mit Längsnuten an gegenüberliegenden Längsseiten der Schieberaufnahmen 21 ausgebildet, in die der Blindeinsatz 23 eingeschoben ist. Im Anwendungsfall kann der Blindeinsatz 23 beispielsweise durch eine Kabeleinführung ersetzt werden. Im Falle der Aneinanderreihung mehrerer Elektroinstallationsdosen 1 übereinander oder nebeneinander zur Bereitstellung einer Mehrfachsteckdose, eines Mehrfachschalters oder einer sonstigen Kombination aus Funktionseinheiten, können über Anreihverbinder mehrere der Dosen 1 über die Schieberaufnahmen 21 und entsprechende Anreihverbinder miteinander verbunden werden.

Die aus dem Stand der Technik bekannten Elektroinstallationsdosen sind in keiner Weise dazu vorbereitet, unabhängig von einem in ihnen aufgenommenen Funktionseinsatz eine Zusatzfunktion, insbesondere eine elektrische Zusatzfunktion wie eine Beleuchtung, bereitzustellen. Wenn eine solche Zusatzfunktion im Stand der Technik benötigt wird, wird diese häufig von dem in der Dose 1 aufgenommenen Funktionsaufsatz, beispielsweise einer Schalterwippe, einem Steckdoseneinsatz oder dergleichen bereitgestellt. Im Falle einer Auswechslung des Steckdoseneinsatzes geht somit auch die Zusatzfunktion, etwa eine Beleuchtungsfunktion, verloren oder sie muss von dem neu eingesetzten Funktionssatz erneut zur Verfügung gestellt werden.

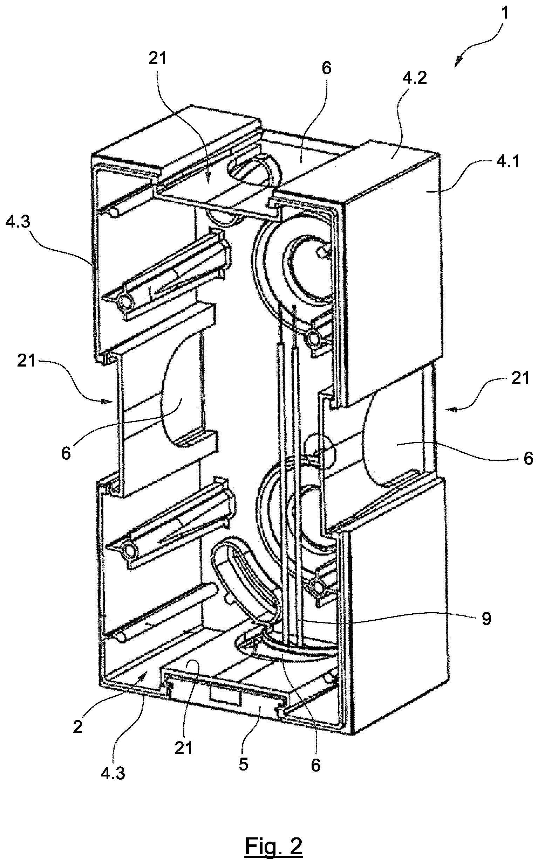

Um hier Abhilfe zu schaffen ist in Figur 2 eine beispielhafte Ausführungsform einer erfindungsgemäßen Elektroinstallationsdose 1 für die Aufputzmontage gezeigt. Diese Installationsdose 1 unterscheidet sich von der in Figur 1 gezeigten insbesondere in der Ausbildung des Einsatzes 5. Erfindungsgemäß ist nämlich vorgesehen, dass der Einsatz 5 eine die Beleuchtungsfunktion aufweist.

Die äußere Wandung 4 der Installationsdose 1 weist vier Wandabschnitte 4.1, 4.2, 4.3, 4.4 der Wandung 4 auf, wobei jeweils zwei aneinander grenzende Abschnitte 4.1, 4.2, 4.3, 4.4 senkrecht zueinander angeordnet sind. Während bei der gezeigten Ausführungsform lediglich der in der Darstellung untere Wandabschnitt 4.3 in seiner zugeordneten Schiebeaufnahme 21 einen erfindungsgemäßen Einsatz 5 mit Beleuchtungsfunktion aufweist, sind die weiteren, geometrisch identisch ausgebildeten Schiebeführungen 21 unverschlossen. Im Anwendungsfall könnten diese Schiebeaufnahmen 21 zum Verschluss des jeweils zugeordneten Durchbruchs 6 entweder mit einem Blindeinsatz 23 (vgl. Figur 1), z.B. einer Gummitülle, oder mit einem anderen funktionalen Einsatz, beispielsweise einer Kabeleinführung, einem Anreihverbinder oder dergleichen verschlossen sein.

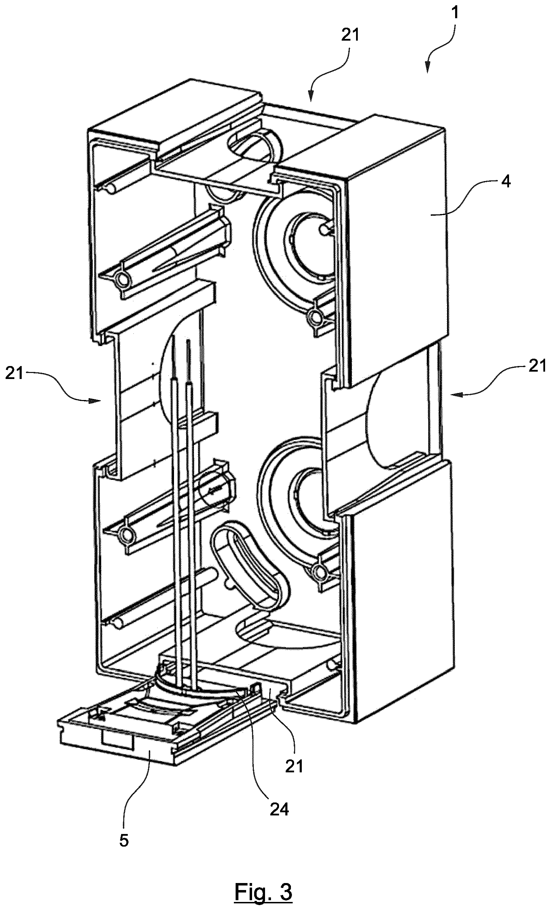

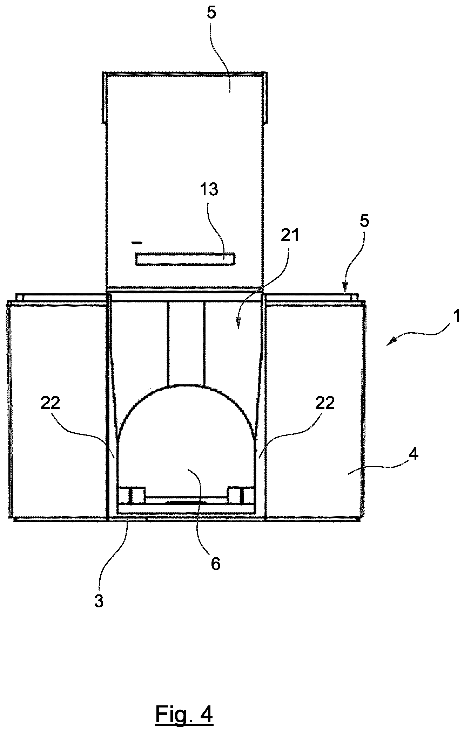

In der Zusammenschau der Figuren 2 bis 8 ist zu erkennen, dass in dem Einsatz 5 eine Leiterplatine 7 mit mindestens einem Leuchtmittel 8, hier einer LED, aufgenommen ist, die über elektrische Leiter 9 mit Netzspannung versorgt werden können. Dazu kann der Einsatz 5 in seinem eingesetzten Zustand (vgl. Figur 2) mit den elektrischen Leitern durch den Durchbruch 6 in den Installationsraum 2 eintreten und dort beispielsweise über eine Leiteranschlussklemme des Steckdoseneinsatzes mit der Netzspannung versorgt werden. Der Einsatz 5 beziehungsweise die Schiebe- oder Steckaufnahme 21 der Dose 1 wird somit einer weiteren Funktionalität zugeführt, nämlich der Bereitstellung einer Beleuchtung. Dazu kann beispielsweise ausgehend von der Ausführungsform gemäß dem Stand der Technik gemäß Figur 1 der Blindschieber 23 aus der Schiebeaufnahme 21 entfernt und durch den Einsatz 5 der erfindungsgemäßen Ausführungsform gemäß Figur 2 ersetzt werden. Nach dem Entfernen des Blindschiebers 23 können in einem ersten Schritt die Leiter 9 durch den Durchbruch 6 in den Installationsraum 2 eingeführt werden. Danach kann der Einsatz 5 der Schiebeaufnahme 21 weiter angenähert werden, insbesondere von unten an die Schiebeaufnahme 21 angenähert werden. Es ist nicht zwingend erforderlich, dass der Einsatz 5 über die gesamte Länge der Schiebeaufnahme 21 beziehungsweise über die gesamte Höhe der Wandung 4 in die Schiebeaufnahme 21 eingeschoben wird, was zu einer Abscherung der Leiter 9 führen könnte. Vielmehr kann der Einsatz 5 bereits so weit dem Boden 3 der Dose 1 angenähert an die Schiebeaufnahme 21 angesetzt werden, dass die Leiter 9 im Wesentlichen ohne mechanische Belastung durch den Durchbruch 6 in den Installationsraum 2 eintreten können, beispielsweise angrenzend an die der Stirnseite S zugewandte Berandung des Durchbruchs 6. Durch weiteres Einschieben des Einsatzes 5 in Richtung des Bodens 3 greift dann der Einsatz 5 in eine Nut-Feder-Verbindung ein und wird über diese in der Schiebeaufnahme 21 festgelegt. Insbesondere kann dazu an der Schiebeaufnahme 21 eine teilausgebrochene Nut ausgebildet sein, wie dies mit Bezug auf die Figur 4 gezeigt ist, bei der die Nut 22 an der Stirnseite 6 ausgespart und über eine Anlaufschräge auf Ihre dem Boden 3 zugewandte maximale Breite aufweitet. Auf diese Weise wird eine sogenannte Einformgeometrie geschaffen, die das prozesssichere Einschieben des Einsatzes 5 in die Schiebeaufnahme 21 gewährleistet.

Um einem Abscheren der elektrischen Leiter 9 zusätzlich entgegenzuwirken sind an der dem Installationsraum 2 zugewandten Innenseite des Einsatzes 5 Kabeldurchführungen 25 als Einzelkabeldurchführungen ausgebildet, in denen die elektrischen Leiter 9 formflüssig geführt sind. Die Kabeldurchführung 25 weist dabei eine Durchlassrichtung auf, die sich senkrecht zu dem Öffnungsquerschnitt des Durchbruchs 6 erstreckt.

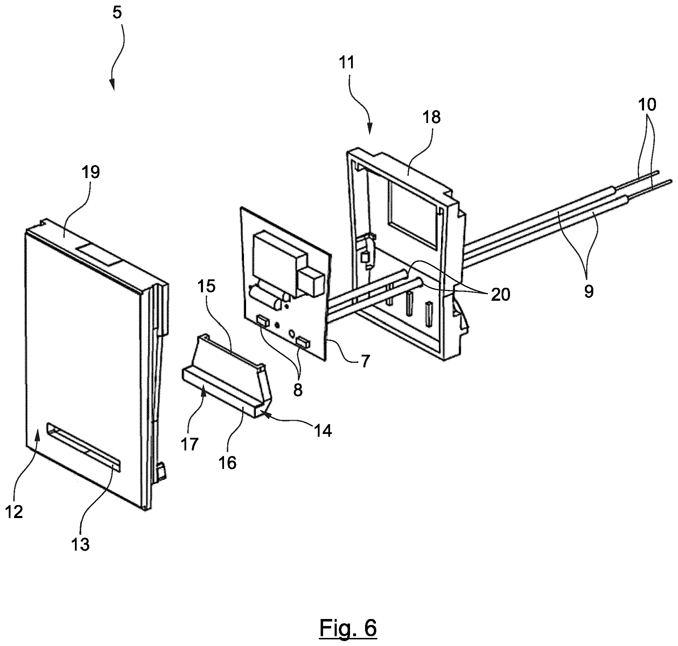

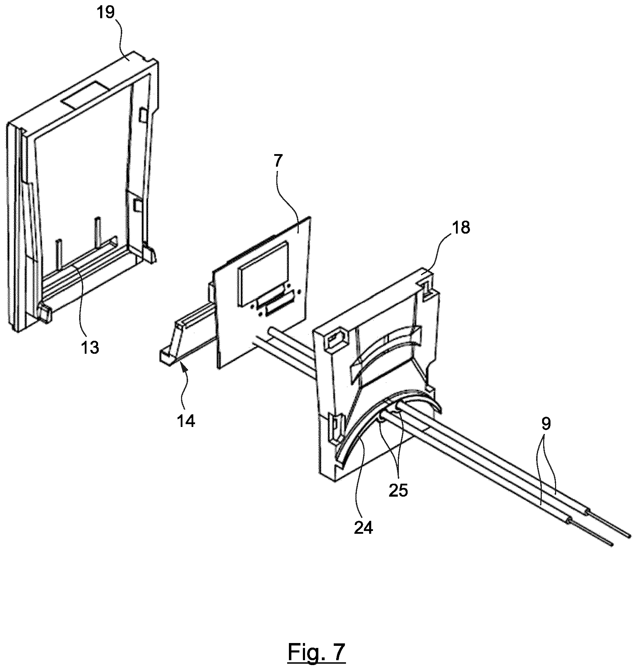

Die Figuren 6 und 7 zeigen in Explosionsdarstellungen den Aufbau eines erfindungsgemäßen Einsatzes 5. Dieser kann im Wesentlichen aus dem Gehäuse 11 aufweisend einen Platinenträger 18 sowie eine Abdeckung 19 bestehen. Der Platinenträger 18 weist Kabeldurchlässe 20 auf, über die die Leiter 9 von außerhalb des Gehäuses 11 bis an die Platine 7 herangeführt und mit dieser fest verbunden sind, beispielsweise an der Platine 7 verlötet sind. Die Platine 7 weist neben der Ansteuerelektronik insbesondere zwei Lichtquellen 8, vorliegend LEDs, auf, deren Lichtaustritt in einen Lichteintritt 15 eines Lichtleiters 14 mündet. Über den Lichtleiter 14 wird das Licht der LEDs 8 gemischt und einem Lichtaustritt 16 zugeführt. Der Lichtaustritt 16, insbesondere eine außenliegende Lichtaustrittseite 17 des Lichtaustritts 16, fluchtet mit der Außenseite 12 der Abdeckung 19 im zusammengesetzten Zustand des Einsatzes 5. An der dem Installationsraum 2 zugewandten Innenseite weist der Platinenträger 18 einen stegförmigen Vorsprung 24 auf, der den Platinenträger 18 verstärkt und an den die Kabeldurchführungen 25, vorliegend als Einzelkabeldurchführung ausgebildet, angeformt und damit stabilisiert sind. Die Leiter 9 können eine Aderendbehandlung aufweisen, um eine einfache Kontaktierung des Netzanschlusses zu erlauben.

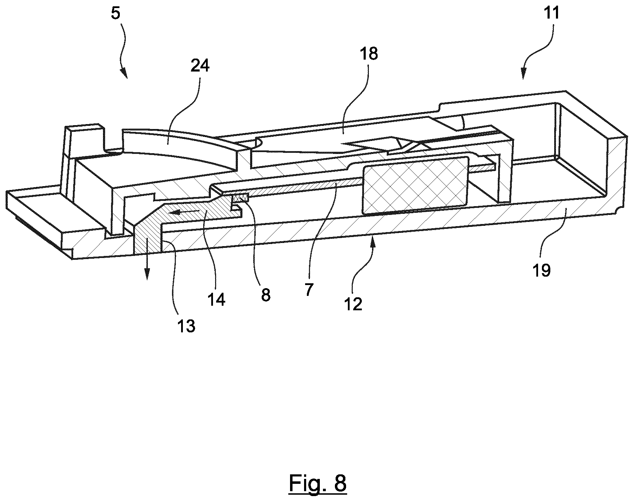

Der Längsquerschnitt in Figur 8 zeigt insbesondere auch die Lichtführung des erfindungsgemäßen Einsatzes 5. Das aus den Lichtquellen 8 senkrecht zur Platine 7 austretende Licht wird unmittelbar nach dem Austritt in den Lichtleiter 14 eingekoppelt. Nach der Einkopplung erfährt das Licht eine erste geeignete Richtungsänderung, etwa eine 90°-Richtungsänderung, sodass das Licht parallel zu der Platine 7 weiter in Richtung Lichtaustritt propagiert. Sobald das Licht in der Flucht des Lichtaustrittes angekommen ist, erfährt es eine weitere geeignete Richtungsänderung, etwa eine 90°-Richtungsänderung, um senkrecht durch den Lichtdurchlass 13 aus dem Einsatz 5 auszutreten. Der Lichtleiter 14 ist einerseits in dem Lichtdurchlass 13 der Abdeckung 19 formflüssig aufgenommen und andererseits zwischen dem Platinenträger 18 und der Abdeckung 19 formflüssig gehalten, sodass der Lichtleiter in allen drei Raumrichtungen fixiert ist und damit eine reproduzierbare Lichtführung erreicht wird.

Abweichend von dem in den Figuren 6 bis 8 gezeigten Einsatz 5, weist dieser keine Platine für die Bereitstellung der funktionalen elektrischen Komponente auf. Stattdessen ist eine direktverdrahtete elektrische Komponente 26 in Form einer Datenschnittstelle bereitgestellt. Die direkt verdrahtete elektrische Komponente 26 weist ein Buchsengehäuse 27 auf, welches form- und kraftschlüssige in dem Gehäuse 11 des Einsatzes 5 aufgenommen und gehalten ist. Für die Direktverdrahtung der Komponente 26 weist der Einsatz 5 an seiner dem Installationsraum 2 (vergleiche Figur 2) zugewandten Seite einen Verdrahtungsanschluss 30 auf.

Nur mit einer Steckeraufnahme 28 liegt das Buchsengehäuse 27 zur Außenseite des Gehäuses 11 des Einsatzes 5 frei. Mit Rastnasen 29 kann der Einsatz 5 durch einen Durchbruch 6 (vergleiche Figur 2) in den Installationsraum 2 hineinragen und damit den Einsatz 5 in Bezug auf eine Kante des Durchbruchs 6 arretieren, um beim Herauslösen eines Steckers ein versehentliches Herausziehen des Einsatzes 5 aus der Schiebeaufnahme 21 zu verhindern.

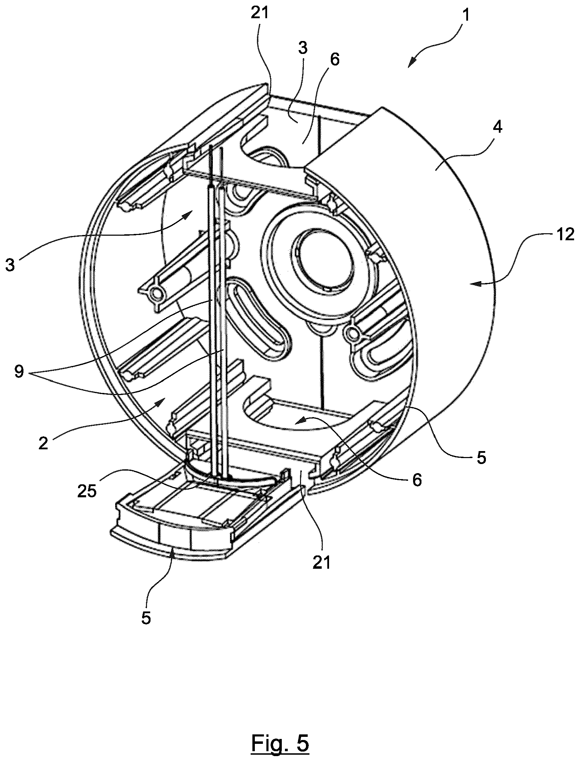

Die Figur 5 veranschaulicht eine weitere Ausführungsform einer erfindungsgemäßen Elektroinstallationsdose 1 mit im Wesentlichen rundem Installationsraum 2.

### Bezugszeichenliste

- 1: Elektroinstallationsdose
- 2: Installationsraum
- 3: Boden
- 4: Wandung
- 5: Einsatz
- 6: Durchbruch
- 7: Leiterplatine
- 8: Leuchtmittel
- 9: elektrischer Leiter
- 10: Aderendbehandlung
- 11: Gehäuse
- 12: Außenseite
- 13: Lichtdurchlass
- 14: Lichtleiter
- 15: Lichteintritt
- 16: Lichtaustritt
- 17: Lichtaustrittseite
- 18: Platinenträger
- 19: Abdeckung
- 20: Kabeldurchlass
- 21: Schiebeaufnahme
- 22: Nut
- 23: Blindeinsatz
- 24: Vorsprung
- 25: Kabeldurchführung
- 26: direktverdrahtete elektrische Komponente, Datenschnittstelle
- 27: Buchsengehäuse
- 28: Steckeraufnahme
- 29: Rastnasen
- 30: Verdrahtungsanschluss
- S: Stirnseite

## Patentansprüche

1. Elektroinstallationsdose (1) für die Aufputzmontage, wobei ein Installationsraum (2) der Elektroinstallationsdose (1) von einem Boden (3) und einer von dem Boden (3) abstehenden Wandung (4) begrenzt ist, wobei die Wandung (4) mindestens einen über einen entnehmbaren Einsatz (5) verschlossenen Durchbruch (6) aufweist, **dadurch gekennzeichnet, dass** der Einsatz (5) eine Leiterplatine (7) mit einer elektrischen Komponente (8) oder eine direktverdrahtete elektrische Komponente (26) aufweist, wobei mindestens ein elektrischer Leiter (9) von der Leiterplatine (7) oder von der direktverdrahteten elektrischen Komponente (26) in den Installationsraum (2) geführt ist.

2. Elektroinstallationsdose (1) nach Anspruch 1, bei der der elektrische Leiter (9) mit der Leiterplatine (7) oder der direktverdrahteten elektrischen Komponente fest verbunden, vorzugsweise an der Leiterplatine (7) oder der direktverdrahteten elektrischen Komponente verlötet ist, und wobei der elektrische Leiter (9) vorzugsweise an seinem von der Leiterplatine (7) oder der direktverdrahteten elektrischen Komponente abgewandten freien Ende eine Aderendbehandlung (10) für den Direktanschluss an Netzspannung, etwa an eine Leiteranschlussklemme, aufweist.

3. Elektroinstallationsdose (1) nach Anspruch 1 oder 2, bei der die Leiterplatine (7) oder die direktverdrahtete elektrische Komponente mindestens ein Leuchtmittel (8), beispielsweise mindestens eine LED, und der Einsatz (5) ein Gehäuse (11) aufweist, in dem die Leiterplatine (7) oder die direktverdrahtete elektrische Komponente mit dem Leuchtmittel (8) aufgenommen ist, wobei das Gehäuse (11) einen senkrecht zur Außenseite (12) der Wandung (4) geöffneten Lichtdurchlass (13) aufweist.

4. Elektroinstallationsdose (1) nach Anspruch 3, bei der das Leuchtmittel (8) außerhalb der Flucht des Lichtdurchlasses (13) und ein Lichtleiter (14) zwischen dem Leuchtmittel (8) und dem Lichtdurchlass (13) angeordnet ist, wobei ein Lichteintritt (15) des Lichtleiters (14) dem Leuchtmittel (8) und ein Lichtaustritt (16) des Lichtleiters (14) dem Lichtdurchlass (13) zugewandt ist.

5. Elektroinstallationsdose (1) nach Anspruch 4, bei der der Lichtaustritt (16) des Lichtleiters (14) in den Durchbruch (6) hineinragt und formschlüssig in dem Durchbruch (6) aufgenommen ist, wobei eine Lichtaustrittsseite (17) des Lichtaustritts (16) mit einer Außenseite (12) der Wandung (4) und/oder des Gehäuses (11) fluchtet.

6. Elektroinstallationsdose (1) nach einem der vorangegangenen Ansprüche, bei der ein Gehäuse (11) des Einsatzes (5) einen dem Installationsraum (2) zugewandten Platinenträger (18), in dem die Leiterplatine (7) aufgenommen ist, und eine den Platinenträger (18) verschließende Abdeckung (19) aufweist.

7. Elektroinstallationsdose (1) nach Anspruch 6, bei der der Platinenträger (18) mindestens einen Kabeldurchlass (20) für den mindestens einen elektrischen Leiter (9) aufweist, durch den der elektrische Leiter (9) in den Installationsraum (2) mündet.

8. Elektroinstallationsdose (1) nach einem der vorangegangenen Ansprüche, bei der der Lichtleiter (14) zwischen einem Platinenträger (18) und einer Abdeckung (19) des Gehäuses (11) gehalten ist, wobei sich eine Lichteintrittsrichtung und eine Lichtaustrittsrichtung des Lichtleiters (14) parallel und beabstandet zueinander erstrecken.

9. Elektroinstallationsdose (1) nach einem der vorangegangenen Ansprüche, bei der der Durchbruch (6) in eine Steck- oder Schiebeaufnahme (21) mündet, die zu einer von dem Boden (3) abgewandten Stirnseite (S) der Wandung (4) offen ist, wobei der Einsatz (5) über die Stirnseite (S) in den Durchbruch (6) eingesetzt ist.

10. Elektroinstallationsdose (1) nach Anspruch 9, bei der die Steck- oder Schiebeaufnahme (21) an mindestens einer von zwei gegenüberliegenden Kanten, die sich senkrecht zu dem Boden (3) erstrecken, eine Nut (22) aufweist, die in einem an die Stirnseite (S) angrenzenden Bereich ausgebrochen ist.

11. Elektroinstallationsdose (1) nach Anspruch 9 oder 10, bei der die Steck- oder Schiebeaufnahme (21) in einem an die Stirnseite (S) angrenzenden Bereich zu dem Installationsraum (2) hin geschlossen ist und in einem daran angrenzenden, dem Boden (3) zugewandten Bereich den Durchbruch (6) aufweist.

12. Elektroinstallationsdose (1) nach einem der Ansprüche 9 bis 11, bei der die Elektroinstallationsdose (1) mehrere der Steck- oder Schiebeaufnahmen (21) aufweist, vorzugsweise an unterschiedlichen Wandabschnitten (4.1, 4.2, 4.3, 4.4) der Wandung (4), wobei die mehreren Steck- oder Schiebeaufnahmen (21) identisch ausgebildet sind, und wobei mindestens eine der Steck- oder Schiebeaufnahmen (21) von einem weiteren Einsatz, etwa von einem Blindeinsatz (23), verschlossen ist, sodass durch Vertauschen des weiteren Einsatzes mit dem die Leiterplatine (7) aufweisenden Einsatz (5) die Position der Leiterplatine (7) in Bezug auf die Wandung (4) der Elektroinstallationsdose (1) variiert werden kann.

13. Elektroinstallationsdose (1) nach einem der vorangegangen Ansprüche, bei der der Einsatz (5), vorzugsweise ein Platinenträger (18) des Einsatzes (5), an der dem Durchbruch (6) zugewandten Seite einen stegförmigen Vorsprung (24) aufweist, mit dem der Einsatz (5) an einer Berandung des Durchbruchs (6) anliegt, so dass der Einsatz (5) in Bezug auf den Durchbruch (6) positioniert ist.

14. Elektroinstallationsdose (1) nach Anspruch 13, bei der an den stegförmigen Vorsprung (24) angeformt mindestens eine Kabeldurchführung (25) für den mindestens einen elektrischen Leiter ausgebildet ist, die in den Durchbruch (6) mündet.

15. Elektroinstallationsdose (1) nach Anspruch 14, bei der die mindestens eine Kabeldurchführung (25) als eine Einzelkabeldurchführung ausgebildet ist, durch die der mindestens eine elektrische Leiter (9) formschlüssig hindurch geführt ist, wobei sich eine Durchlassrichtung der Kabeldurchführung (25) senkrecht zum Öffnungsquerschnitt des Durchbruchs (6) erstreckt.

## Claims

1. An electrical installation box (1) for surface mounting, wherein an installation space (2) of the electrical installation box (1) is delimited by a base (3) and a wall (4) projecting from the base (3), the wall (4) having at least one aperture (6) closed by means of a removable insert (5), **characterized in in that** the insert (5) has a printed circuit board (7) with an electrical component (8) or a directly wired electrical component (26), wherein at least one electrical conductor (9) is led from the printed circuit board (7) or from the directly wired electrical component (26) into the installation space (2).

2. The electrical installation box (1) according to claim 1, wherein the electrical conductor (9) is firmly connected to the printed circuit board (7) or the direct-wired electrical component, preferably soldered to the printed circuit board (7) or the direct-wired electrical component, and wherein the electrical conductor (9) preferably has at its free end facing away from the printed circuit board (7) or the direct-wired electrical component a wire end treatment (10) for direct connection to mains voltage, for example to a conductor connection terminal.

3. The electrical installation box (1) according to claim 1 or 2, wherein the printed circuit board (7) or the direct-wired electrical component has at least one illuminant (8), for example at least one LED, and the insert (5) has a housing (11) in which the printed circuit board (7) or the direct-wired electrical component with the illuminant (8) is accommodated, the housing (11) having a light passage (13) which is open perpendicularly to the outer side (12) of the wall (4).

4. The electrical installation box (1) according to claim 3, wherein the illuminant (8) is arranged outside the alignment of the light passage (13) and a light guide (14) is arranged between the illuminant (8) and the light passage (13), a light inlet (15) of the light guide (14) facing the illuminant (8) and a light outlet (16) of the light guide (14) facing the light passage (13).

5. The electrical installation box (1) according to claim 4, wherein the light outlet (16) of the light guide (14) projects into the aperture (6) and is received in a form-fitting manner in the aperture (6), a light outlet side (17) of the light outlet (16) being aligned with an outer side (12) of the wall (4) and/or of the housing (11).

6. The electrical installation box (1) according to any one of the preceding claims, wherein a housing (11) of the insert (5) has a circuit board carrier (18) facing the installation space (2), in which the circuit board (7) is accommodated, and a cover (19) closing the circuit board carrier (18).

7. The electrical installation box (1) according to claim 6, wherein the circuit board carrier (18) has at least one cable passage (20) for the at least one electrical conductor (9), through which the electrical conductor (9) opens into the installation space (2).

8. The electrical installation box (1) according to any one of the preceding claims, wherein the light guide (14) is held between a circuit board carrier (18) and a cover (19) of the housing (11), wherein a light entry direction and a light exit direction of the light guide (14) extend parallel to and spaced apart from each other.

9. The electrical installation box (1) according to any one of the preceding claims, in which the aperture (6) opens into a plug-in or sliding receptacle (21) which is open towards an end face (S) of the wall (4) facing away from the base (3), the insert (5) being inserted into the aperture (6) via the end face (S).

10. The electrical installation box (1) according to claim 9, wherein the plug-in or sliding receptacle (21) has a groove (22) on at least one of two opposite edges extending perpendicular to the base (3), which groove is broken out in an area adjacent to the end face (S).

11. The electrical installation box (1) according to claim 9 or 10, wherein the plug-in or sliding receptacle (21) is closed towards the installation space (2) in a region adjacent to the end face (S) and has the aperture (6) in a region adjacent thereto and facing the floor (3).

12. The electrical installation box (1) according to one of claims 9 to 11, wherein the electrical installation box (1) has a plurality of the plug-in or sliding receptacles (21), preferably on different wall sections (4.1, 4.2, 4.3, 4.4) of the wall (4), the plurality of plug-in or sliding receptacles (21) being of identical design, and at least one of the plug-in or sliding receptacles (21) being closed by a further insert, for example by a dummy insert (23), so that, by interchanging the further insert with the insert (5) having the printed circuit board (7), the position of the printed circuit board (7) with respect to the wall (4) of the electrical installation box (1) can be varied.

13. The electrical installation box (1) according to any one of the preceding claims, wherein the insert (5), preferably a circuit board carrier (18) of the insert (5), has a web-shaped projection (24) on the side facing the aperture (6), with which projection the insert (5) bears against a rim of the aperture (6), so that the insert (5) is positioned with respect to the aperture (6).

14. The electrical installation box (1) according to claim 13, wherein at least one cable bushing (25) for the at least one electrical conductor is formed integrally with the web-shaped projection (24), which cable bushing (25) opens into the aperture (6).

15. The electrical installation box (1) according to claim 14, wherein the at least one cable bushing (25) is designed as a single cable bushing through which the at least one electrical conductor (9) is guided in a form-fitting manner, a passage direction of the cable bushing (25) extending perpendicularly to the opening cross section of the aperture (6).

## Revendications

1. Prise d'installation électrique (1) pour un montage sur crépi, dans laquelle un espace d'installation (2) de la prise d'installation électrique (1) est délimité par un fond (3) et par une paroi (4) partant du fond (3), dans lequel la paroi (4) comprend au moins une percée (6) obturée par un insert amovible (5), **caractérisée en ce que** l'insert (5) comprend une carte de circuit imprimé (7) avec un composant électrique (8) ou un composant électrique câblé directement (26), dans laquelle au moins un conducteur électrique (9) est guidé, par la carte de circuit imprimé (7) ou par le composant électrique câblé directement (26), vers l'espace d'installation (2).

2. Prise d'installation électrique (1) selon la revendication 1, dans laquelle le conducteur électrique (9) est relié de manière fixe avec la carte de circuit imprimé (7) ou le composant électrique câblé directement, de préférence brasé sur la carte de circuit imprimé (7) ou bien sur le composant électrique câblé directement et dans laquelle le conducteur électrique (9) comprend, de préférence, au niveau de son extrémité libre opposée à la carte de circuit imprimé (7) ou au composant électrique câblé directement, un traitement d'extrémité de fil (10) pour le raccordement direct à une tension de réseau, par exemple à une borne de raccordement de conducteur.

3. Prise d'installation électrique (1) selon la revendication 1 ou 2, dans laquelle la carte de circuit imprimé (7) ou le composant électrique câblé directement comprend au moins un moyen d'éclairage (8), par exemple au moins une LED, et l'insert (5) comprend un boîtier (11) dans lequel la carte de circuit imprimé (7) ou le composant électrique câblé directement, avec le moyen d'éclairage (8), est logé, dans laquelle le boîtier (11) comprend un passage de lumière (13) ouvert perpendiculairement à la face externe (12) de la paroi (4).

4. Prise d'installation électrique (1) selon la revendication 3, dans laquelle le moyen d'éclairage (8) est disposé hors de l'alignement du passage de lumière (13) et une fibre optique (14) est disposée entre le moyen d'éclairage (8) et le passage de lumière (13), dans laquelle une entrée de lumière (15) de la fibre optique (14) est orientée vers le moyen d'éclairage (8) et une sortie de lumière (16) de la fibre optique (14) est orientée vers le passage de lumière (13).

5. Prise d'installation électrique (1) selon la revendication 4, dans laquelle la sortie de lumière (16) de la fibre optique (14) dépasse dans la percée (6) et est logée par complémentarité de forme dans la percée (6), dans laquelle la face de sortie de lumière (17) de la sortie de lumière (16) est alignée avec une face externe (12) de la paroi (4) et/ou du boîtier (11).

6. Prise d'installation électrique (1) selon l'une des revendications précédentes, dans laquelle un boîtier (11) de l'insert (5) comprend un support de carte (18) orienté vers l'espace d'installation (2), dans lequel est logée la carte de circuit imprimé (7), et un couvercle (19) fermant le support de carte (18).

7. Prise d'installation électrique (1) selon la revendication 6, dans laquelle le support de carte (18) comprend au moins un passage de câble (20) pour l'au moins un conducteur électrique (9), à travers lequel le conducteur électrique (9) débouche dans l'espace d'installation (2).

8. Prise d'installation électrique (1) selon l'une des revendications précédentes, dans laquelle la fibre optique (14) est maintenue entre un support de carte (18) et un couvercle (19) du boîtier (11), dans laquelle une direction d'entrée de lumière et une direction de sortie de lumière du conducteur de lumière (14) s'étendent de manière parallèle et distante entre elles.

9. Prise d'installation électrique (1) selon l'une des revendications précédentes, dans laquelle la percée (6) débouche dans un logement d'enfichage ou de coulissement (21), qui est ouvert vers une face frontale (S) de la paroi (4), opposée au fond (3), dans laquelle l'insert (5) est inséré par la face frontale (S) dans la percée (6).

10. Prise d'installation électrique (1) selon la revendication 9, dans laquelle le logement d'enfichage ou de coulissement (21) comprend, au niveau d'au moins une parmi deux arêtes opposées, qui s'étendent perpendiculairement au fond (3), une rainure (22), qui est interrompue dans une zone adjacente à la face frontale (S).

11. Prise d'installation électrique (1) selon la revendication 9 ou 10, dans laquelle le logement d'enfichage ou de coulissement (21) est fermé, dans une zone adjacente à la face frontale (S), par rapport à l'espace d'installation (2) et comprend la percée (6) dans une zone orientée vers le fond (3), adjacente à celui-ci.

12. Prise d'installation électrique (1) selon l'une des revendications 9 à 11, dans laquelle la prise d'installation électrique (1) comprend plusieurs des logements d'enfichage ou de coulissement (21), de préférence au niveau de différentes portions de parois (4.1, 4.2, 4.3, 4.4) de la paroi (4), dans laquelle les plusieurs logements d'enfichage ou de coulissement (21) sont réalisés de manière identique, et dans laquelle au moins un des logements d'enfichage ou de coulissement (21) est fermé par un autre insert, âr exemple par un insert aveugle (23), de sorte qu'une confusion de l'autre insert avec l'insert (5) comprenant la carte de circuit imprimé (7) ne puisse pas modifier la position de la carte de circuit imprimé (7) par rapport à la paroi (4) de la prise d'installation électrique (1).

13. Prise d'installation électrique (1) selon l'une des revendications précédentes, dans laquelle l'insert (5), de préférence un support de carte (18) de l'insert (5) comprend, au niveau de la face orientée vers la percée (6), une saillie en forme de nervure (24), avec lequel l'insert (5) s'appuie contre une bordure de la percée (6) de sorte que l'insert (5) est positionné par rapport à la percée (6).

14. Prise d'installation électrique (1) selon la revendication 13, dans laquelle, au niveau de la saillie en forme de nervure (24), est moulé au moins un passage de câble (25) pour l'au moins un conducteur électrique, qui débouche dans la percée (6).

15. Prise d'installation électrique (1) selon la revendication 14, dans laquelle l'au moins un passage de câble (25) est conçu comme un passage de câble unique, à travers lequel l'au moins un conducteur électrique (9) est guidé par complémentarité de forme, dans laquelle une direction de passage du passage de câble (25) s'étend perpendiculairement à section transversale d'ouverture de la percée (6).
